# EUROPEAN PATENT SPECIFICATION

(11) **EP 4 442 392 B1**
(45) Date of publication and mention of the grant of the patent: **05.11.2025**
(21) Application number: 23861652.8
(22) Date of filing: 12.09.2023
(51) Int. Cl.: B23B 31/16, B23B 31/10

(54) **HYDRAULIC CHUCK FOR EASY JAW FORMATION THEREON**
HYDRAULISCHES SPANNFUTTER ZUR EINFACHEN BACKENBILDUNG DARAUF
MANDRIN HYDRAULIQUE POUR FORMATION FACILE DE MÂCHOIRE SUR CELUI-CI

(30) Priority: 17.02.2023 KR 20230021266
(43) Date of publication of application: 09.10.2024
(73) Proprietor: Samchully Machinery Co., Ltd, Incheon 21697 (KR)
(72) Inventor: SEO, Jae Won, Seoul 08208 (KR)
(74) Representative: M. Zardi & Co S.A.
(86) International application number: PCT/KR2023/013650
(87) International publication number: WO 2024/172228

(56) References cited:
- CN-A- 114 918 444
- JP-U- S 628 009
- KR-A- 20170 140 240
- KR-B1- 101 335 381
- KR-B1- 101 714 476
- US-A1- 2019 329 325

## Description

### CROSS REFERENCE TO RELATED APPLICATION

The present application claims priority to Korean Patent Application No. 10-2023-0021266, filed Feb. 17, 2023, later published as KR 10-2582103.

### BACKGROUND OF THE INVENTION

### Field of the Invention

The present disclosure relates to a hydraulic chuck for gripping a workpiece in machining, and more particularly, to a hydraulic chuck that allows for the molding of soft jaws without the need for a forming ring.

### Description of the Related Art

In machine tools, hydraulic chucks that grip the material (workpiece) to be machined are equipped with jaws that grip the outer or inner diameter of the workpiece. Soft jaws refer to a set of jaws that are individually detachable and attached to master jaws (also called 'base jaws'). Hydraulic chucks with a structure that combines master jaws and soft jaws are suitable for small quantity diverse production because they allow for the machining of soft jaws to fit the shape of the workpiece.

In the hydraulic chucks, several parts are assembled closely but still maintain small gaps.

These gaps are essential elements for the clamping/unclamping operation of the jaws; however, they also hinder high-precision machining work.

To firmly grip the workpiece and improve machining precision, each soft jaw is grinded according to the shape of the workpiece after being mounted to the master jaw.

To molding the soft jaws, a forming ring of the appropriate size is carefully selected based on the size of the workpiece. The master jaw is first placed in the unclamping position, and the soft jaw is installed on the master jaw according to the approximate shape of the workpiece (for example, the outer diameter).

Here, the position at which the soft jaws are fixed to the master jaws is set considering the shape of the workpiece so that the distance they move from the unclamping position to the clamping position is as short as possible.

**In** conventional technology, a forming ring corresponding to the size of the workpiece is attached to the master jaws or soft jaws to fix the position of the soft jaws, and the tips of the soft jaws gathered towards the center of the chuck are bored to fit the size. Afterward, the soft jaws are moved to the unclamping position, the forming ring is removed, and a workpiece is attached to the soft jaws to check if the machining of the soft jaws has been done correctly.

JPS628009U discloses a chuck and a calibration ring.

Korean Utility No. 20-0143395 presents a set of forming rings of various sizes used for forming soft jaws.

Meanwhile, Korean Patent No. 10-1714476 presents a dedicated accessory for limiting the clamping position of the master jaws. This dedicated accessory consists of rods that can be detachably coupled to a cover. Additionally, Korean Patent No. 10-1135514 presents a forming ring with a complex shape on its outer surface.

Korean Patent No. 10-1335381 features a configuration engraved with scales that indicate the rotational angle of the chuck housing, and Korean Application Publication No. 10-2017-0140240 presents a wiper blade provided between the chuck body and master jaws to prevent the infiltration of foreign substances.

Furthermore, there exists a pre-forming method for shaping each tip of the soft jaws to fit the workpiece without using forming rings. The fixation of the soft jaws in this method is achieved by operating the plunger provided inside the hydraulic chuck to the end of its operating range. That is, the soft jaws are machined to fit the size of the workpiece while being kept in their fully opened state.

This method eliminates steps such as attaching forming rings, significantly reducing the machining time of the soft jaws. However, since the soft jaws must be machined to a size somewhat larger than that of the workpiece to be able to grip it, the machining does not precisely match the shape of the workpiece. As a result, there is a limitation in that the soft jaws cannot grip the workpiece with high precision.

In conventional technology, forming rings used must be prepared in various sizes according to the size of the workpiece to be processed, and the management and handling of forming rings are cumbersome as the appropriate size of forming ring must be selected by a skilled worker.

Additionally, when switching to a different type of workpiece, the soft jaws also need to be replaced, and it is common to remachine the soft jaws by mounting the forming rings, considering assembly errors, etc., each time. If the forming ring used in the previous mounting of the soft jaws is reattached, it can minimize additional machining, but this requires the hassle of pairing and managing jaws and forming rings. Especially in factories with mass production facilities, this inconvenience is greater because they hold several forming rings even for the same size of jaws due to the numerous jaws.

An objective of the present disclosure is to provide a hydraulic chuck that enabling jaw molding without forming rings, thereby eliminating the need to manage forming rings and simplifying the jaw molding process, and allowing the workpiece to be gripped with high precision.

Other detailed objectives of the present disclosure will be understood by specialists or researchers in the field through the following detailed description.

### SUMMARY OF THE INVENTION

In order to achieve the above objectives, a hydraulic chuck is provided in accordance with claim 1.

Here, the contact surface of each the master jaw that comes into contact with the contact part can be a curved surface corresponding to the contact part.

Additionally, a stop means is provided to limit the rotation angle of the forming cover, preventing the forming cover from rotating arbitrarily without the user's intention.

Furthermore, the contact part is designed such that its diameter gradually increases in one direction, allowing the distance that the master jaw moves from the unclamping position to the clamping position to vary depending on the rotation angle of the forming cover. This enables fine adjustment of the time required to secure the workpiece according to the machining schedule, thereby aiding in the optimization of process automation.

Furthermore, the forming cover is equipped with an pointing part that displays the rotation angle of the forming cover, allowing users to easily recognize the rotational state of the forming cover.

As for the structure mounting the forming cover, the inner surface of the central hole is formed with a mounting groove in which the forming cover is rotatably seated. And a guide plate is coupled to the chuck housing and covers the edge of the forming cover.

Additionally, to prevent contamination by foreign substances generated during machining, a scraper for removing foreign substances from the outer part of the contact area may be equipped on the chuck housing.

### Advantageous Effects

According to the embodiments of the present invention, it is possible to improve the efficiency of the jaw molding process that accompanies each replacement of the jaws. Additionally, by reducing the time required for clamping/unclamping the workpiece, productivity can be enhanced while precisely gripping the workpiece, thus improving processing quality.

Other detailed effects of the present invention will be obviously understood by experts or researchers in the art through the detailed description described below or during a process of practicing the present invention.

### BRIEF DESCRIPTION OF THE DRAWINGS

FIG. 1 is a perspective view illustrating a state of use of a hydraulic chuck according to an embodiment of the present invention;
FIG. 2 is an exploded view showing main parts of the hydraulic chuck shown in FIG. 1;
FIG. 3 is a perspective view of a forming cover employed in the embodiment shown in FIG. 1;
FIG. 4 is a front view of a forming cover shown in FIG. 3;
FIG. 5 is a front view of the hydraulic chuck shown in FIG. 1;
FIG. 6 is a front view of the main parts of the hydraulic chuck shown in FIG. 1;
FIG. 7 is a front view briedfly showing the state of use of the hydraulic chuck shown in FIG. 1;
FIG. 8a and 8b are front views briedfly showing another use state of the hydraulic chuck shown in FIG. 1;
FIG. 9a and 9b are front views briedfly showing another use state of the hydraulic chuck shown in FIG. 1;

### DETAILED DESCRIPTION OF THE INVENTION

The following description will explain the structure, functionality, and operation of the hydraulic chuck according to the present disclosure, referring to the attached drawings. However, the same reference numerals are given to the same or similar components in all the figures.

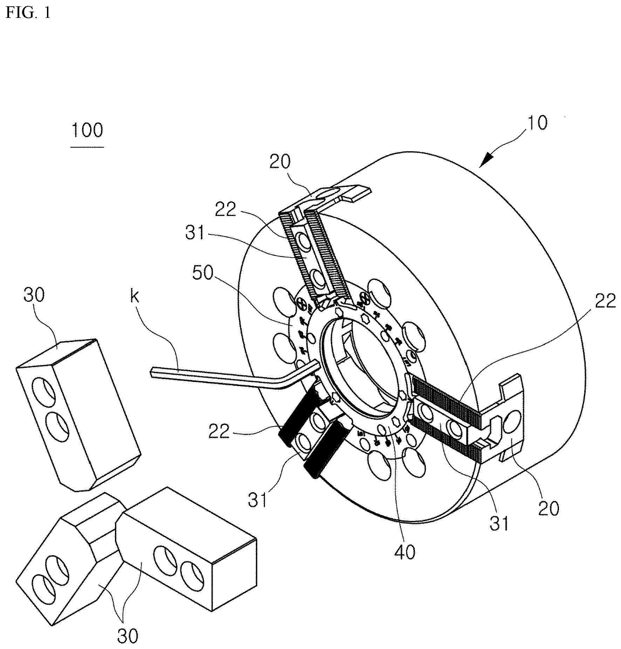

Fig. 1 is a schematic perspective view of a hydraulic chuck according to an embodiment of the present disclosure.

The hydraulic chuck (100) shown in the embodiment comprises a cylindrical chuck housing (10), three master jaws (20) radially positioned on the front of the chuck housing (10), and soft jaws (30) that are detachably coupled to each master jaw (20).

In the illustrated embodiment, the fixing method for the soft jaw (30) involves meshing with threads (22) on the front of the master jaw (20), and the soft jaw (30) is fixed to the master jaw (20) through the combination of a T-shaped nut member (31) and bolts mounted on the master jaw (20). However, the fixing method for the soft jaw can vary.

The master jaws (20) come together toward the center of the chuck housing (10) (clamping operation) or move apart from each other (unclamping operation) by the advance and retreat operation of a plunger (not shown) provided within the chuck housing (10).

In the center of the chuck housing (10), a central hole (11) is formed, penetrating the chuck housing (10) front to back, and a forming cover (40) is mounted in this central hole (11) to rotate freely.

This forming cover (40) can replace existing forming rings by interfering with or releasing interference with the clamping operation of the master jaws (20), depending on its rotation angle.

To rotate the forming cover (40) to the appropriate angle, a non-circular cross-section fitting groove (401) is formed in front of the forming cover, and a hand tool like a wrench (k) can be fitted into this fitting groove (401). Multiple fitting grooves (401) are formed in various orientations to allow the hand tool to be attached to the forming cover (40) without interfering with the soft jaws.

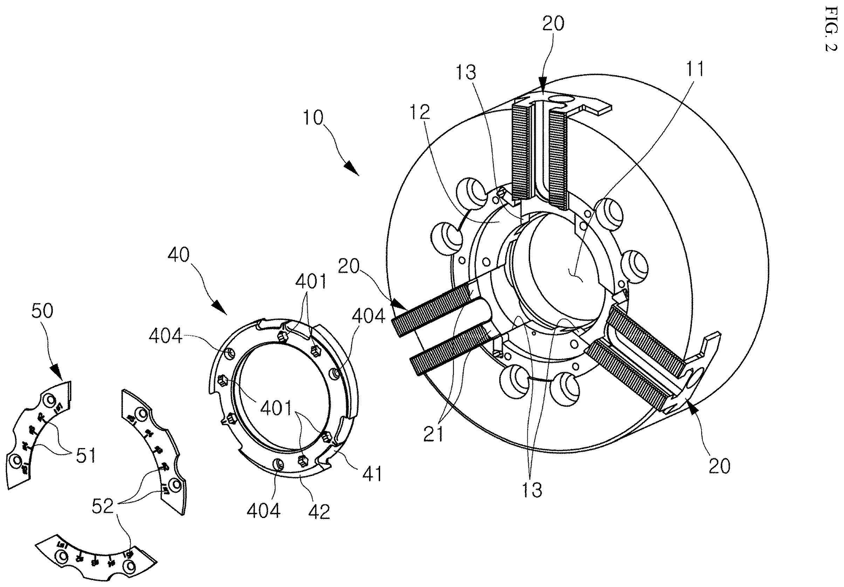

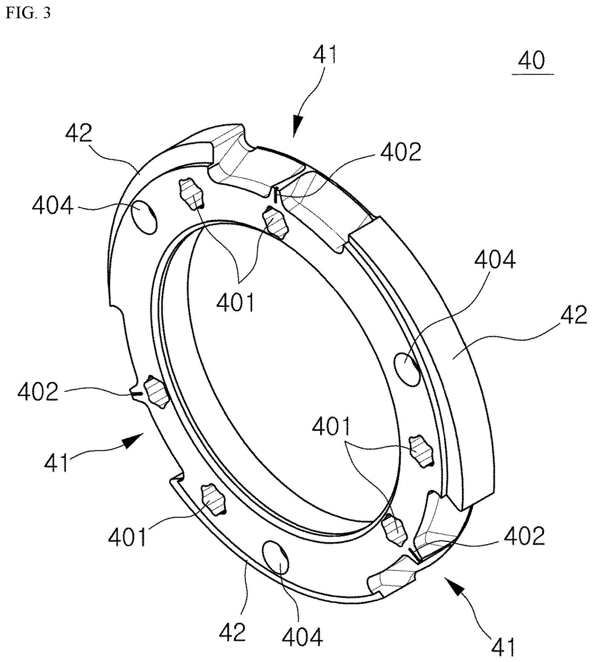

Fig. 2 shows the chuck housing and the forming cover separated, and Fig. 3 to 4 illustrate the forming cover.

The forming cover (40) is a donut-shaped with a certain thickness, rotatably mounted in a mounting groove (12) formed circularly along the inside of the central hole (11) of the chuck housing.

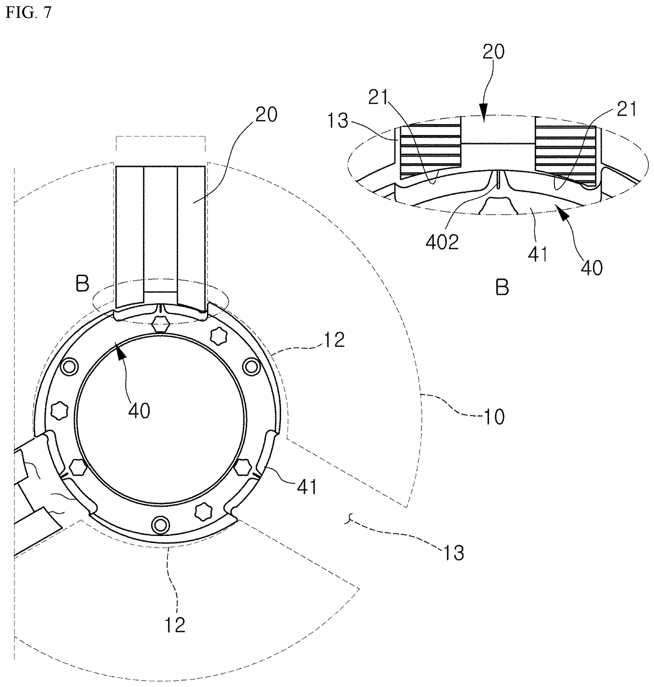

Movement grooves (13), guiding each master jaw (20) to slide radially relative to the chuck housing, are connected to the mounting groove (12). At the position where the workpiece is gripped, the tip of the master jaw advances further towards the center of the chuck housing than the inside of the mounting groove (refer to Figure 7).

After the forming cover (40) is rotatably mounted in the mounting groove (12), guide plates (50) that cover and conceal the edges of the forming cover (40) are coupled to the chuck housing (10).

The guide plates (50) are arc-shaped and form approximately a circle when assembled together. However, the guide plates (50) do not cover the area where the master jaws move, to avoid interfering with the clamping/unclamping operation of the master jaws. The guide plates (50) are installed corresponding to the arc-shaped sections of the mounting groove (12), allowing the master jaws to move between the guide plates.

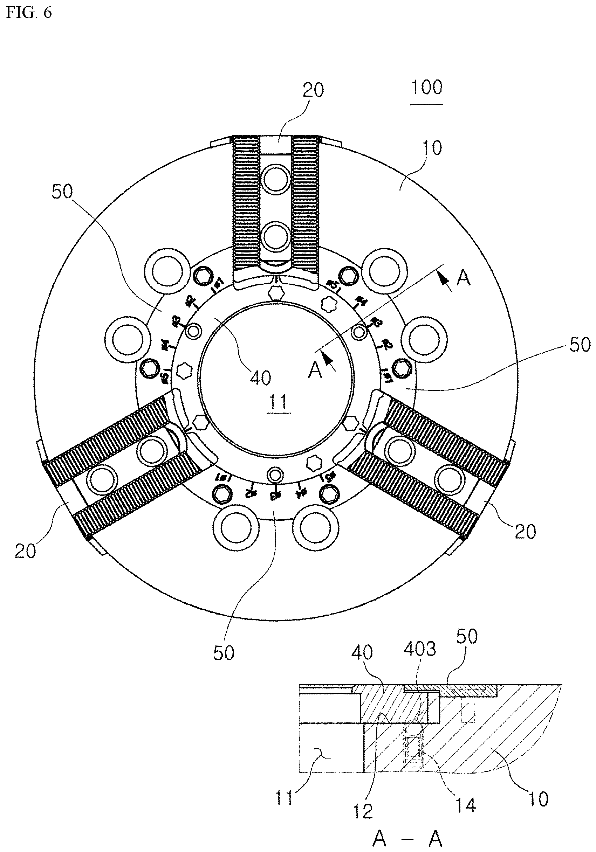

Referring to the drawing enlarged at the A-A cross-sectional part in Fig. 6, the guide plate (50) installed along the circumference of the mounting groove (12) covers the edges of the forming cover (40) mounted in the mounting groove, preventing foreign substances from entering between the mounting groove (12) and the forming cover (40). It also confines the forming cover (40) to prevent it from detaching from the mounting groove (12).

Furthermore, the upper surface of the guide plate (50) is marked with scales (51) and scale values (52), which, along with the pointing part (402) of the forming cover (40) mentioned later, visually display the distance moved by the master jaw according to the rotational angle of the forming cover.

These guide plates (50) can be omitted or replaced with a different configuration depending on the structure by which the forming cover is coupled to the chuck housing.

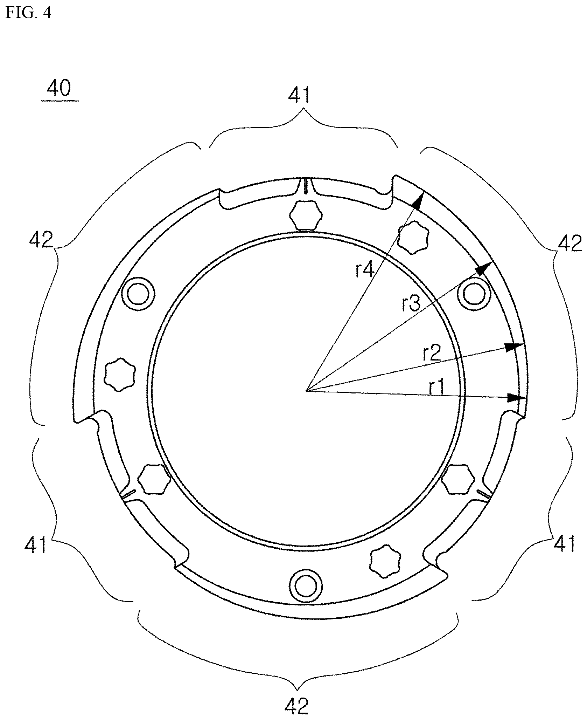

Referring to Fig. 3 and Fig. 4, the perimeter of the forming cover (40) is equipped with receiving parts (41) that accommodate the master jaws during clamping operations, and contact parts (42) with a larger diameter than the receiving parts (41).

The receiving parts (41) are formed at equal intervals according to the arrangement structure of the master jaws, with contact parts (42) located between neighboring receiving parts.

Each receiving part (41) is a wide groove that is recessed towards the center from the outer surface of the forming cover (40) so as not to interfere with the master jaw during clamping operations. The clamping operation is the action where the soft jaws, in their fully opened state, move towards the center of the chuck housing to grip the workpiece. When gripping the workpiece, the master jaw, which is integrated with the soft jaw, enters the receiving part without contacting the forming cover.

On the other hand, the contact parts (42) are areas formed with a larger diameter than the receiving parts (41). As the rotational angle of the forming cover (40) is adjusted, the contact parts (42) are positioned in the section where the master jaw moves. At this point, the master jaw interferes with the contact part (42) during the clamping operation. As the master jaw engages with the contact part (42), the distance it moves to grip and secure the workpiece from its fully opened position (unclamped position) is limited, which is referred to as the 'engagement distance'.

During the clamping operation, the master jaws (20) interfere with the forming cover (contact parts), thereby fixing its position. And thus the machining of the soft jaws attached to the master jaws are performed. After the machining of the soft jaws is completed, the forming cover (40) is rotated so that its receiving parts (41) align with the moving grooves of the master jaws. Subsequently, the workpiece can be gripped through the clamping operation of the hydraulic chuck. By moving the soft jaws only the necessary engagement distance, the time required to secure or release the workpiece can be minimized.

Thus, by engaging with the master jaws, the forming cover fixes the soft jaws in the molding position, allowing the forming cover to replace the forming ring according to conventional technology.

The outer circumference of the forming cover (40) is formed as a curved surface. Accordingly, the contact surface (21) formed on the tip of the master jaw (20), which comes into contact with the contact part (42), can also be formed as a curved surface corresponding to the contact part (42). The contact surface (21) of the master jaw (20) contacting the contact part (42) as a surface enables stable engagement of the master jaw.

Furthermore, the forming cover (40) is equipped with an pointing part (402) that displays the rotational angle of the forming cover. The pointing part (402) can be formed on the front part of the forming cover (40) as an arrow or a length groove.

In the illustrated embodiment, the pointing part (402) is formed in the center of the bottom of the receiving part (41). The pointing part (402) has been positioned in such a way that it remains easily visible, even when the forming cover (40) rotates, as it is not obscured by the guide plate (50).

Users can inspect the pointing part (402) visually to determine whether the movement groove of the master jaw aligns with the receiving part or the contact part.

To prevent unintended rotation of the forming cover (40) except when machining the soft jaws, it's necessary to maintain the alignment between the receiving parts (41) of the forming cover (40) and the movement grooves (13) for the master jaws (20). To achieve this, a stopping means that limits the rotational angle of the forming cover (40) can be implemented.

Referring to Fig. 6, several recesses (403) can be formed on the bottom surface of the forming cover (40), which contacts the bottom of the mounting groove (12). A ball plunger (14) is installed in the mounting groove (12) at positions where the recesses pass. This arrangement allows the ball of the ball plunger (14) to enter one of the recesses (403) when the forming cover (40) is aligned at a specific angle, for example, when the receiving parts (41) aligns with the master jaws. This interaction effectively locks the forming cover in place, preventing unintentional rotation.

Additionally, bolt holes (404) that pass through the forming cover (40) in locations not obscured by the guide plate or similar components can be formed. By fastening a bolt (not shown) into one of these bolt holes (404), the bolt can press against the bottom of the mounting groove, securing the forming cover in a non-rotating position. This feature is particularly useful after the machining of the soft jaws is completed and a large number of workpieces are being repetitively clamped, as it prevents unintended rotation of the forming cover.

These stopping means such as including the recesses (403), ball plunger (14) or bolt holes (404) can be altered into various configurations to prevent the forming cover from rotating arbitrarily.

Referring back to Fig. 4, the radius length of the contact part (42) varies along the circumference of the forming cover (40), meaning that the engagement distance of the master jaw changes depending on the rotational angle of the forming cover.

The radius of the contact part (42) gradually increases from one receiving part to the next along the outer surface (r1 < r2 < r3 < r4). The edges of the contact part (42) form a gentle curve, ensuring that the forming cover (40) can make contact with the master jaw's gripping surface at any rotational angle.

The diameters of the contact parts (42), which are positioned radially, increase in the same direction (counterclockwise in the figure).

This configuration emphasizes that all master jaws make contact with the contact parts having the same diameter.

The gradually increasing diameter of the contact part (42) allows for varying the engagement distance required for the master jaws to move from an unclamped position to a position where it grips and secures the workpiece, depending on the rotational angle of the forming cover (40).

In another embodiment not illustrated, the contact part could be designed with a constant single diameter throughout.

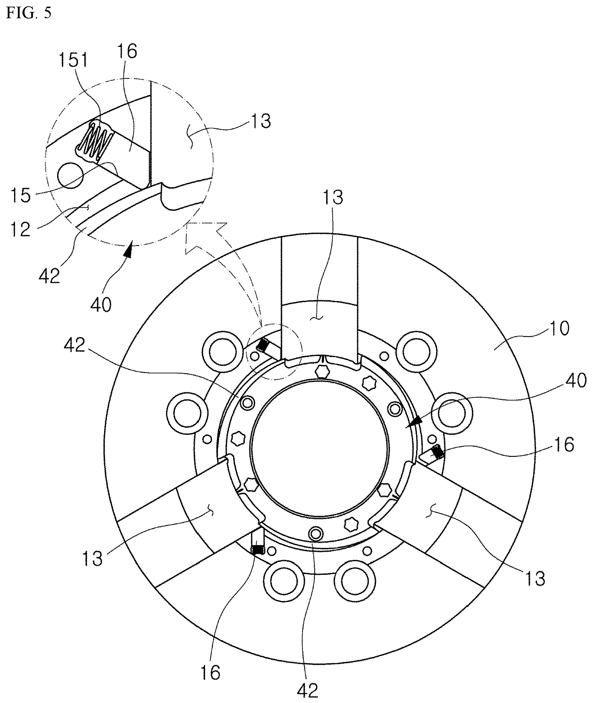

As an additional configuration, referring to Fig. 5, the chuck housing (10) is equipped with a scraper (16) for removing foreign substances from the outer part of the contact part.

In the chuck housing (10), a sliding groove (15) facing the inner wall of the mounting groove (12) is formed, and a scraper (16) elastically supported by a spring (151) is mounted in this sliding groove (15).

The tip of the scraper (16) elastically supports and contacts the circumference of the contact part (42), removing foreign substances adhered around the contact part (42) when the forming cover (40) rotates. Such scrapers are radially provided around the forming cover (40), protecting each contact part (42) from foreign substances.

Fig, 7 to Fig, 8b relate to the usage state of a hydraulic chuck.

Fig. 7 shows the state where the forming cover (40) is rotated so that the receiving parts (41) of the forming cover (40) matche the moving grooves (13) of the hydraulic chuck (10). The user can know the current rotation position of the forming cover (40) by visually confirming that the pointing part (402) formed in the receiving part (41) is oriented in the direction pointing to the master jaw (20).

In this state, the master jaws (20) and the soft jaws coupled to them can perform clamping/unclamping operations without interference from the forming cover (40).

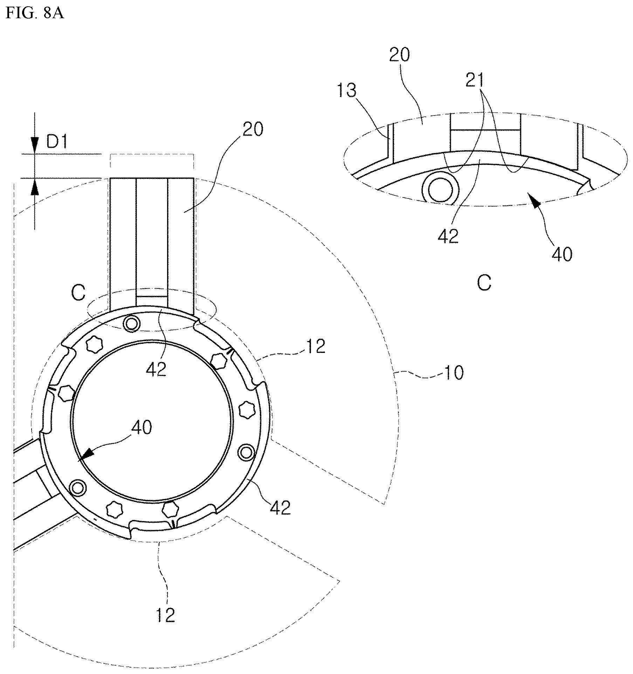

Meanwhile, Fig. 8a to Fig. 9b show the state where the forming cover (40) is rotated to different rotation angles so that the contact parts (42) interfere with the master jaws (20).

The guide plate (50) is marked with the scale (51) and scale value (52) indicated by the pointing part (402). Here, the scale (51) is marked according to the degree of rotation of the forming cover (40), and the scale value (52) indicates the engagement distance moved by the master jaws (soft jaws) from the unclamping position until it is clamped and fixed by the forming cover.

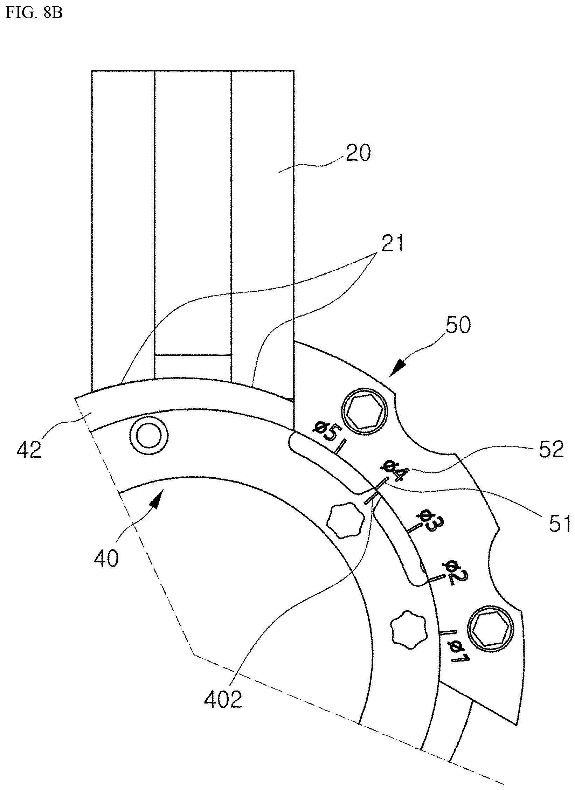

Fig. 8a and Fig. 8b show the state where the forming cover (40) is rotated approximately 45 degrees, and the middle part of the contact part (42) is in contact with the master jaw (20). The master jaw is fixed in position by the contact part (42), having moved a engagement distance (D1) from the fully opened unclamping position.

In this state, the soft jaws are machined, and after the molding is complete, the forming cover is rotated back to its original position so that the receiving part aligns with the master jaw (refer to Fig. 7). Thereafter, the soft jaw (master jaw) moves back and forth by the engagement distance (D1) indicated in the drawing to fix/release the workpiece.

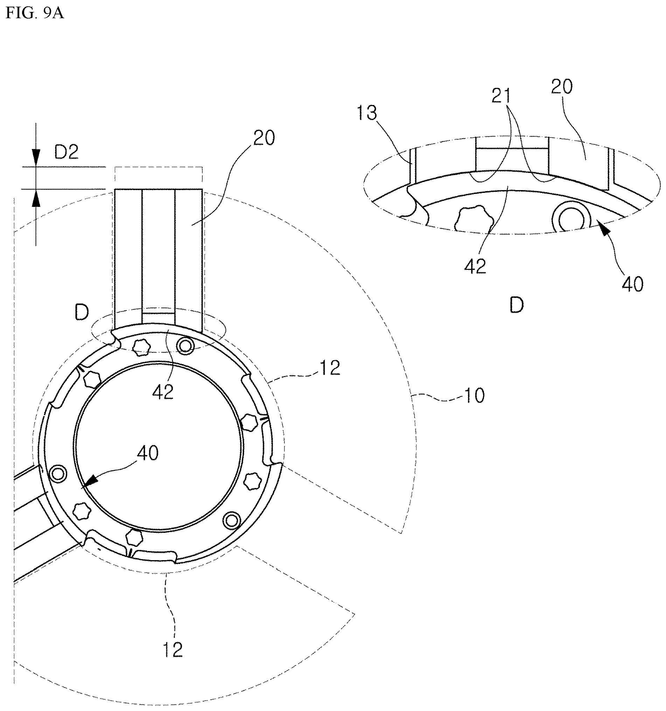

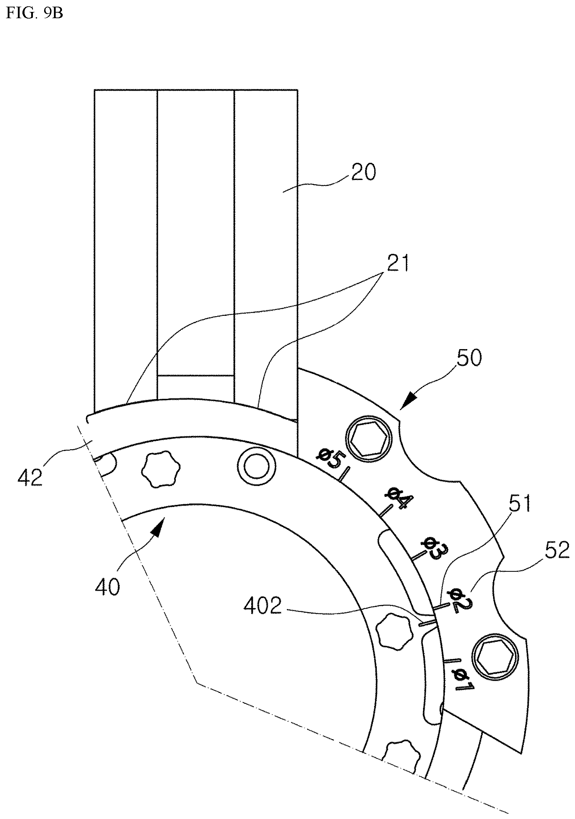

Fig. 9a and Fig. 9b show the state where the forming cover (40) is rotated approximately 75 degrees. The master jaw (20) comes into contact with a larger diameter part of the contact part (42), and the engagement distance (D2) moved by the master jaw (20) from the fully opened unclamping position to being clamped by the forming cover (40) is shorter than the engagement distance in Fig. 8a (D2 < D1).

As the engagement distance (D2) becomes shorter, it subsequently takes less time for the soft jaws to fix/release the workpiece.

Thus, by rotating the forming cover (40) to an appropriate angle, the user can select the diameter of the contact part (42) that will clamp the master jaws (20). This allows the user to vary the time required to fix/release the workpiece, offering a benefit similar to using forming rings of various sizes.

According to the embodiments of the present disclosure, it is possible to omit the separate forming rings that were required to fix the position of the soft jaws during the molding processing of the soft jaws. As a result, it is possible to eliminate the need for various sizes of forming rings that were necessary in conventional technology depending on the size of the workpiece.

Furthermore, when reinstalling previously used jaws, the same forming cover provided in the hydraulic chuck can be reused, which minimizes the areas and time required for reprocessing the replaced jaws and reduces the time spent on preparation work before the main processing.

## Claims

1. A chuck (100) comprising a plurality of master jaws (20) that are radially slidable relative to the chuck housing (10) and soft jaws (30) coupled to each of the master jaws (20), wherein a forming cover (40) is rotatably mounted in the central hole (11) of the chuck housing (10), and the circumference of the forming cover (40) is provided with receiving parts (41) that accommodate the master jaws (20) when they are clamped, and contacts parts (42) with a larger diameter than the receiving parts (41), **characterized in that** the master jaws (20) interfere with the contacts parts (42) at the angle at which the forming cover (40) is rotated that the contacts parts (42) face the master jaws (20), limiting the distance by which the master jaws (20) move from the unclamping position to the clamping position.

2. A hydraulic chuck (100) according to claim 1, wherein the contact surface (21) of the master jaw (20), which comes into contact with the contact part (42), is a curved surface (21) corresponding to the contact part (42).

3. A hydraulic chuck (100) according to claim 1, further comprising a stop means (14, 403, 404) for limiting the rotation angle of the forming cover (40).

4. A hydraulic chuck (100) according to claim 1, wherein the contact part (42) has a shape in which its diameter gradually increases in one direction, and the distance by which the master jaw (20) moves from the unclamping position to the clamping position varies according to the rotation angle of the forming cover (40).

5. A hydraulic chuck (100) according to claim 4, further comprising a pointing part (402) that shows the rotation angle of the forming cover (40).

6. A hydraulic chuck (100) according to any one of claims 1 to 5, wherein the inner surface of the central hole (11) is formed with a mounting groove (12) in which the forming cover (40) is rotatably seated, and a guide plate (50) that is coupled to the chuck housing (10) and covers the edge of the forming cover (40).

7. A hydraulic chuck (100) according to any one of claims 1 to 5, wherein the chuck housing (10) is equipped with a scraper (16) for removing foreign substances from the outer part of the contact part (42).

## Patentansprüche

1. Spannfutter (100) umfassend eine Vielzahl von Master-Backen (20), die relativ zu einem Spannfuttergehäuse (10) radial verschiebbar sind, und Soft-Backen (30), die mit jeder der Master-Backen (20) gekoppelt sind, wobei eine Formabdeckung (40) in dem zentralen Loch (11) des Spannfuttergehäuses (10) drehbar montiert ist, und der Umfang der Formabdeckung (40) mit Aufnahmeteilen (41), welche die Master-Backen (20) aufnehmen, wenn sie eingespannt sind, und Kontaktteilen (42) mit einem größeren Durchmesser als die Aufnahmeteile (41) versehen ist, **dadurch gekennzeichnet, dass** sich die Master-Backen (20) mit den Kontaktteilen (42) in dem Winkel überlagern, in dem die Formabdeckung (40) so gedreht ist, dass die Kontaktteile (42) den Master-Backen (20) zugewandt sind, wobei sie den Abstand begrenzen, um den sich die Master-Backen (20) von der Ausspannposition zu der Einspannposition bewegen.

2. Hydraulisches Spannfutter (100) nach Anspruch 1, wobei die Kontaktoberfläche (21) der Master-Backe (20), die in Kontakt mit dem Kontaktteil (42) kommt, eine gekrümmte Oberfläche (21) ist, die dem Kontaktteil (42) entspricht.

3. Hydraulisches Spannfutter (100) nach Anspruch 1, ferner umfassend eine Stoppeinrichtung (14, 403, 404) zum Begrenzen des Drehwinkels der Formabdeckung (40).

4. Hydraulisches Spannfutter (100) nach Anspruch 1, wobei das Kontaktteil (42) eine Form aufweist, bei der ihr Durchmesser in einer Richtung allmählich zunimmt, und der Abstand, um den sich die Master-Backe (20) von der Ausspannposition zu der Einspannposition bewegt, gemäß dem Drehwinkel der Formabdeckung (40) variiert.

5. Hydraulisches Spannfutter (100) nach Anspruch 4, ferner umfassend ein Zeigerteil (402), das den Drehwinkel der Formabdeckung (40) zeigt.

6. Hydraulisches Spannfutter (100) nach einem der Ansprüche 1 bis 5, wobei die innere Oberfläche des zentralen Lochs (11) mit einer Montagenut (12), in der die Formabdeckung (40) drehbar sitzt, und einer Führungsplatte (50) gebildet ist, die mit dem Spannfuttergehäuse (10) gekoppelt ist und den Rand der Formabdeckung (40) abdeckt.

7. Hydraulisches Spannfutter (100) nach einem der Ansprüche 1 bis 5, wobei das Spannfuttergehäuse (10) mit einem Schaber (16) zum Entfernen von Fremdsubstanzen von dem äußeren Teil des Kontaktteils (42) ausgestattet ist.

## Revendications

1. Mandrin (100) comprenant une pluralité de mors principaux (20) coulissant radialement par rapport au corps de mandrin (10) et des mors tendres (30) couplés à chacun des mors principaux (20), dans lequel un couvercle de formage (40) est monté de manière rotative dans l'orifice central (11) du corps de mandrin (10), et la circonférence du couvercle de formage (40) est pourvue de parties de réception (41) qui logent lesdits mors principaux (20) lorsqu'ils sont serrés, et de parties de contact (42) de diamètre supérieur aux parties de réception (41), **caractérisé en ce que** les mors principaux (20) interfèrent avec les parties de contact (42) selon l'angle auquel le couvercle de formage (40) est tourné de sorte que les parties de contact (42) font face aux mors principaux (20), de manière à limiter la distance de déplacement des mors principaux (20) depuis la position de desserrage jusqu'à la position de serrage

2. Mandrin hydraulique (100) selon la revendication 1, dans lequel la surface de contact (21) du mors principal (20), entrant en contact avec la partie de contact (42), est une surface courbe (21) correspondant à ladite partie de contact (42).

3. Mandrin hydraulique (100) selon la revendication 1, comprenant en outre un moyen de butée (14, 403, 404) destiné à limiter l'angle de rotation du couvercle de formage (40).

4. Mandrin hydraulique (100) selon la revendication 1, dans lequel la partie de contact (42) présente une forme dont le diamètre augmente progressivement dans une direction, et la distance de déplacement du mors principal (20) entre la position de desserrage et la position de serrage varie en fonction de l'angle de rotation du couvercle de formage (40).

5. Mandrin hydraulique (100) selon la revendication 4, comprenant en outre une partie indicatrice (402) indiquant l'angle de rotation du couvercle de formage (40).

6. Mandrin hydraulique (100) selon l'une quelconque des revendications 1 à 5, dans lequel la surface interne de l'orifice central (11) comporte une rainure de montage (12) dans laquelle le couvercle de formage (40) est logé de manière rotative, et comporte une plaque de guidage (50) qui est couplée au corps de mandrin (10) et couvre le bord du couvercle de formage (40).

7. Mandrin hydraulique (100) selon l'une quelconque des revendications 1 à 5, dans lequel le corps de mandrin (10) est muni d'un racleur (16) destiné à éliminer les corps étrangers de la partie externe de la partie de contact (42).
